# EUROPEAN PATENT SPECIFICATION

(11) **EP 1 118 538 B1**
(45) Date of publication and mention of the grant of the patent: **02.02.2005**
(21) Application number: 01201482.5
(22) Date of filing: 18.06.1997
(51) Int. Cl.: B64D 17/56, E05B 51/02

(54) **Locking device**
Verriegelungsvorrichtung
Dispositif de verrouillage

(30) Priority: 18.06.1996 GB 9612688; 14.02.1997 GB 9703041
(43) Date of publication of application: 25.07.2001
(62) Divisional of application: 97926152.6
(73) Proprietor: ITW Limited, Swansea SA5 4YE (GB)
(72) Inventor: Crisp, David John, London E8 1DN (GB)
(74) Representative: Charlton, Peter John

(56) References cited:
- DE-C- 341 824
- FR-A- 119 368
- GB-A- 206 463
- US-A- 906 052
- US-A- 3 690 605
- US-A- 3 981 302
- US-A- 5 421 177

## Description

This invention relates to a locking device.

A particular application for such a locking device is as a security seal for use on passenger aircraft. The device can be used to seal the containers used for the in-flight distribution of perishable and non-perishable goods. The theft of goods from containers costs airlines vast sums of money each year. Although containers are sealed when they leave the warehouse, it is necessary for the seals to be easily removable by hand as it is quite impractical for cabin crews to carry special seal removal tools on the aircraft. We have found that these problems can be solved by a locking device which is pressure-sensitive, the device thus being actuated by the reduced pressure during flight. However, the invention does not concern a pressure-sensitive locking device.

DE-C-341824 discloses a keyless padlock with a hasp 12. A locking element 15 is inserted from the side, through an aperture in the padlock housing and through holes in the arms of the hasp. The inner end of the locking member engages behind a catch 4, which can rotate against the action of spring 5. To unlock the padlock, the head 16 of the member 15 is sheared off, and then the remainder of the member is pushed out (using some sort of tool) through the opposite side of the housing.

GB-A-2064638 discloses a padlock with a key, but access to the key hole can be blocked by cover which is locked by a breakable seal.

The present invention provides a locking device comprising: a housing having a first opening and a second opening, the first opening communicating with a channel in the housing; a rigid insertable member having first and second arms which lie in a common plane and which are rigidly joined to one another, the first arm having an aperture and said first arm being adapted to be slidingly insertable lengthwise through the first opening and into the channel, the second arm being simultaneously slidingly insertable lengthwise through the second opening, and the housing having an aperture which registers with the aperture of the first arm when the insertable member is inserted into the housing; and a disposable locking element adapted to lockably engage with the first arm of the insertable member and the housing when the first arm has been inserted in the channel, an insertion portion of the disposable locking element engaging in said apertures of the housing and the first arm, the disposable locking element being breakable by release of the insertable member from the housing; characterised in that: the aperture of said first arm extends therethrough substantially perpendicular to said common plane whereby in use the disposable locking element is pushed onto the housing in a direction substantially perpendicular to said common plane, part of the disposable locking element being breakable by manual manipulation thereby to permit disengagement thereof from the insertable member.

The locking device can serve both as a barrier seal and as an indicative seal. The insertable member is shaped so as to engage with a hasp or other securing device of an aircraft goods container. The insertable member can be U or J-shaped whereby the. limbs can be inserted in two channels in the housing and lockable in one or both such channels, the device then being usable in the same way as a padlock. The locking device includes an additional disposable locking element which engages with the elongate member in the locked position, and which has to be physically broken to permit withdrawal of the elongate member from the channel.

Reference is now made to the accompanying drawings, in which:
Figure 1 is an exploded perspective view of a locking device according to an embodiment of the invention;
Figure 2 is an end view of the disposable locking element used in the embodiment;
Figure 3 is a plan view of the embodiment when ready to be locked; and
Figure 4 is a plan view of the embodiment in the locked position, and partly cutaway to show internal details.

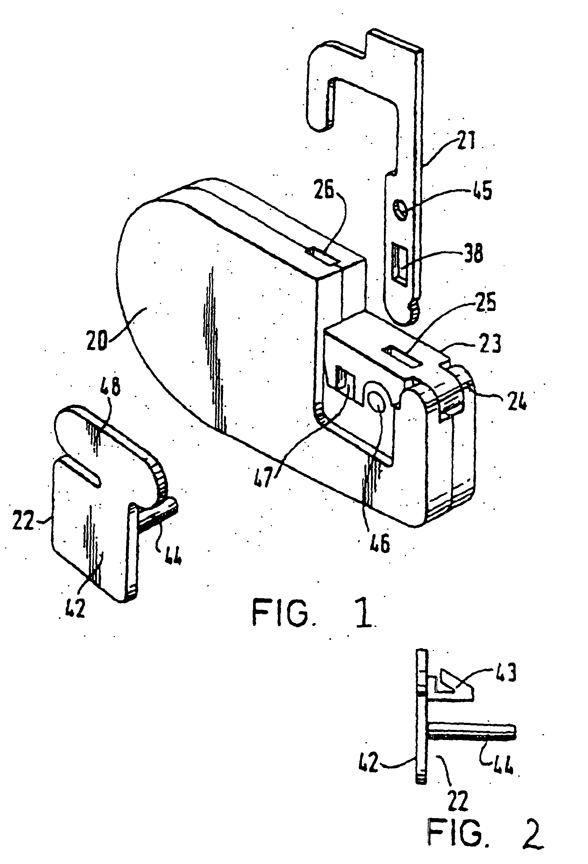

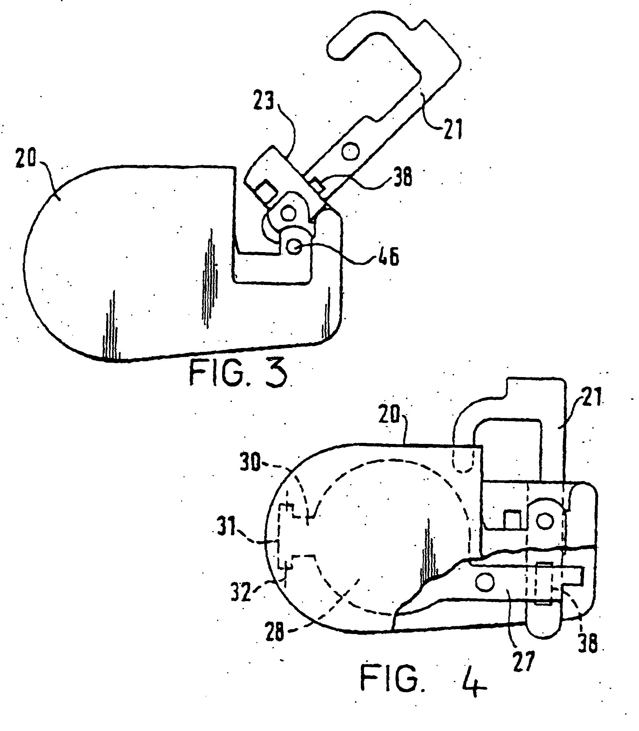

Referring now to Figures 1 to 4 an embodiment of the invention is described. The locking device shown includes a housing 20, an insertable member in the form of a flat bar 21 and a disposable locking element 22. The housing has a hinged guide member 23, pivoted to an end portion 24 of the housing. The guide member 23 is able to pivot between an open position (Figure 3) and a closed position (Figure 4). The guide member 23 has an opening 25 for receiving the bar 21, and in the closed position the opening 25, which extends through the guide member, is in register with openings at opposing ends of the main body of the housing 20, so as to effectively form a channel through the housing.

The bar 21 is J-shaped. An end portion of the longer limb can be pre-placed in the opening 25 of the guide member 23, with the guide member in the open position as shown in Figure 3. In order to effect locking, as described in more detail below, the guide member 23 is then rotated to the closed position (Figure 4) and the longer limb of the bar 21 is then fully inserted in the channel of the housing 20, the end portion of the longer limb projecting slightly from the other side of the housing (Figure 4). The shorter limb of the bar 21 is received in an opening 26 in a side wall of the housing, and in the locked position travels to a short extent through the opening into the interior of the housing (Figure 4). The fit of the end of the longer limb of the bar 21 in the opening 25 is sufficiently close that the bar 21 can be held by the guide member 23, as shown in Figure 3, but does not impede further insertion of the bar 21 through the opening 25 until the bar reaches the locked position, as shown in Figure 4.

The locking device includes a supplementary security seal in the form of a disposable locking element 22 (Figures 1 and 2). The disposable locking element 22 includes a head part 42 in the form of a flat tab, and upstanding on one side thereof a plug part 43 and a locking post 44. The disposable locking element 22 cooperates with the guide member 23 (which is part of the housing 20) and the bar 21 in the following manner.

The bar 21 has a circular hole 45 in its longer limb spaced from the trailing end (on insertion) of the slot 38. The guide member 23 has a corresponding through hole 46 whereby, when the bar 21 is locked in the housing 20, the holes 45 and 46 are in register and can receive the locking post 44 of the disposable locking element 22. The guide member 23 has a hollow interior, with an opening 47 spaced to one side of the hole 46. The plug part 43 of the disposable locking element is in the form of a resilient barb. The plug part 43 passes through the opening 47 as the locking post 44 is inserted through the holes 46 and 45. As the plug part 43 passes through the opening 47, the barb is resiliently deflected to one side, but as soon as it is inside the guide member 23, the barb resiliently returns to its original dimensions, and resists withdrawal. In this position, the bar 21 is locked by the locking post 44. Thus, the disposable locking element 22 must be released in order to withdraw the bar 21.

The head part 42 incorporates a tear line which separates the parts of the head part respectively attached to the plug part 43 and the locking post 44. Thus, by manual manipulation, which is assisted by a pull tab 48, the disposable locking element can be split into two parts. The locking post 44 can then be freely withdrawn, permitting release of the bar 21. The plug part 43 remains inside the guide member 23 but the guide member 23 can now be freely rotated to the open position, thereby releasing the plug part. The disposable locking element 22 can be marked for security purposes, such as with a serial number or bar code. If desired, the locking device can be relocked using a new disposable locking element.

It is sometimes desirable for containers on aircraft to be openable while the aircraft is still on the ground, for example if there is a flight delay. This can be accommodated according to the present invention as the device is only locked by the disposable locking element 22. In a typical situation, a limited number of containers of the aircraft would be locked in this way, the remaining containers being locked in a full pressure-sensitive manner.

A container on an aircraft may be locked by the device according to the invention by cooperation between the bar 21 and a hasp or other securing device on the container. Alternatively, a cable may be provided with loops at its end. The cable is then used to secure a container door in the closed position and the loops are held by the bar 21 which acts in the manner of a padlock.

## Claims

1. A locking device comprising:
a housing (20) having a first opening (25) and a second opening (26), the first opening communicating with a channel in the housing;
a rigid insertable member (21) having first and second arms which lie in a common plane and which are rigidly joined to one another, the first arm having an aperture (45) and said first arm being adapted to be slidingly insertable lengthwise through the first opening (25) and into the channel, the second arm being simultaneously slidingly insertable lengthwise through the second opening (26), and the housing having an aperture (46) which registers with the aperture of the first arm when the insertable member (21) is inserted into the housing; and
a disposable locking element (22) adapted to lockably engage with the first arm of the insertable member (21) and the housing (20) when the first arm has been inserted in the channel, an insertion portion (44) of the disposable locking element engaging in said apertures (45, 46) of the housing and the first arm, the disposable locking element being breakable by release of the insertable member from the housing; **characterised in that**:
the aperture (45) of said first arm extends therethrough substantially perpendicular to said common plane whereby in use the disposable locking element (22) is pushed onto the housing (20) in a direction substantially perpendicular to said common plane, part of the disposable locking element (22) being breakable by manual manipulation thereby to permit disengagement thereof from the insertable member (21).

2. A locking device as claimed in claim 1, in which the disposable locking element is of plastics material and includes a head part (42) and a plug part (43), the plug part being resiliently deformable so as to permit engagement with but resist disengagement from the housing (20) and/or the insertable member (21), and the head part (42) including a tear line whereby manual manipulation of the head part will permit separation thereof from the plug part (43) with resultant disengagement from the housing and/or insertable member.

3. A locking device as claimed in claim 2, in which the insertion position (44) of the disposable locking element comprises a locking post adjoining the head part (42), the plug part being engageable with the housing and the locking post being simultaneously engageable in the apertures of the housing and the insertable member, wherein the tear line separates respective parts of the head part adjoining the plug part and the locking post, whereby tearing along the tear line permits the locking post to be disengaged from the housing and from the insertable member.

4. A locking device according to any preceding claim wherein the insertable member (21) is J or U-shaped.

5. A locking device according to any preceding claim wherein the housing (20) includes a hinged guide member (23), the guide member (23) including the opening (25) for receiving one arm of the insertable member (21).

## Patentansprüche

1. Verriegelungsvorrichtung beinhaltend:
ein Gehäuse (20), welches eine erste Öffnung (25) und eine zweite Öffnung (26) aufweist, wobei die erste Öffnung mit einem Kanal im Gehäuse in Verbindung ist;
ein starres, einführbares Bauteil (21), das erste und zweite Arme aufweist, die in einer gemeinsamen Ebene liegen und starr miteinander verbunden sind, wobei der erste Arm eine Aussparung (45) aufweist und ausgelegt ist, gleitend längs durch die erste Öffnung (25) und in den Kanal einführbar zu sein, und wobei der zweite Arm gleichzeitig gleitend längs durch die zweite Öffnung (26) einführbar ist, und wobei das Gehäuse eine Aussparung (46) hat, die mit der Aussparung des ersten Arms fluchtet, wenn das einführbare Bauteil (21) in das Gehäuse eingeführt ist; und
ein wegwerfbares Verriegelungselement (22), welches ausgelegt ist, um mit dem ersten Arm des einführbaren Bauteils (21) und dem Gehäuse (20) sperrend in Eingriff zu gelangen, wenn der erste Arm in den Kanal eingeführt wurde, ferner ein Einführteil (44) des wegwerfbaren Verriegelungselements, das in die erwähnten Aussparungen (45, 46) des Gehäuses und des ersten Arms eingreift, wobei das wegwerfbare Verriegelungselement durch Lösen des einführbaren Bauteils von dem Gehäuse zerbrechbar ist, **dadurch gekennzeichnet dass**:
die Aussparung (45) des ersten Arms sich durch diesen im Wesentlichen senkrecht zur gemeinsamen Ebene erstreckt, wobei im Gebrauchsfall das wegwerfbare Verriegelungselement (22) in Richtung im Wesentlichen senkrecht. zur gemeinsamen Ebene auf das Gehäuse (20) gedrückt wird, wobei ein Teil des wegwerfbaren Verriegelungselements (22) durch manuelle Manipulation zerbrochen werden kann, um dadurch dessen Lösen von dem einführbaren Bauteil (21) zu erlauben.

2. Verriegelungsvorrichtung nach Anspruch 1, wobei das wegwerfbare Verriegelungselement aus Kunststoffmaterial besteht und einen Kopfteil (42) und einen Steckteil (43) aufweist, wobei der Steckteil elastisch verformbar ist, um einen Eingriff mit dem Gehäuse (20) und/oder dem einführbaren Bauteil (21) zu erlauben, aber einem Lösen davon zu widerstehen, und wobei der Kopfteil (42) eine Reißlinie beinhaltet, wobei eine manuelle Manipulation des Kopfteils eine Trennung desselben von dem Steckteil (43) erlaubt, mit dem Ergebnis einer Loslösung von dem Gehäuse und/oder von dem einführbaren Bauteil.

3. Verriegelungsvorrichtung nach Anspruch 2, in welcher der Einführteil (44) des wegwerfbaren Verriegelungselements eine Verriegelungsstange angrenzend an das Kopfteil (42) beinhaltet, der Steckteil mit dem Gehäuse in Eingriff bringbar ist und die Verriegelungsstange gleichzeitig in den Öffnungen des Gehäuses und des einführbaren Bauteils eingreifen kann, wobei die Reißlinie entsprechende Teile des Kopfteiles angrenzend an den Steckteil und die Verriegelungsstange trennt; wobei ein Reißen entlang der Reißlinie es erlaubt, die Verriegelungsstange von dem Gehäuse und von dem einführbaren Bauteil außer Eingriff zu bringen.

4. Verriegelungsvorrichtung nach einem der vorhergehenden Ansprüche, wobei das einführbare Bauteil (21) J- oder U-förmig ist.

5. Verriegelungsvorrichtung nach einem der vorhergehenden Ansprüche, wobei das Gehäuse (20) ein schwenkbar angeordnetes Führungselement (23) aufweist, wobei das Führungselement (23) die Öffnung (25) für die Aufnahme eines Arms des einführbaren Bauteils (21) aufweist.

## Revendications

1. Dispositif de verrouillage comprenant :
un boîtier (20) comportant une première ouverture (25) et une deuxième ouverture (26), la première ouverture communiquant avec un canal dans le boîtier ;
un élément rigide insérable (21) comportant des premier et deuxième bras qui se situent dans un plan commun et qui sont reliés rigidement l'un à l'autre, le premier bras comportant une ouverture (45) et ledit premier bras étant adapté à être inséré dans le sens de la longueur et par coulissement à travers la première ouverture (25) et dans le canal, le deuxième bras étant simultanément insérable dans le sens de la longueur et par coulissement à travers la deuxième ouverture (26), et le boîtier comportant une ouverture (46) qui coïncide avec l'ouverture du premier bras lorsque l'élément insérable (21) est inséré dans le boîtier ; et
un élément de verrouillage jetable (22) adapté à s'engager en verrouillage avec le premier bras de l'élément insérable (21) et le boîtier (20) lorsque le premier bras a été inséré dans le canal, une portion d'insertion (44) de l'élément de verrouillage jetable s'engageant dans lesdites ouvertures (45, 46) du boîtier et le premier bras, l'élément de verrouillage jetable pouvant être rompu par libération de l'élément insérable du boîtier ; **caractérisé en ce que** :
l'ouverture (45) dudit premier bras traverse le bras sensiblement perpendiculairement audit plan commun de telle sorte qu'en service l'élément de verrouillage jetable (22) se trouve poussé sur le boîtier (20) dans une direction sensiblement perpendiculaire audit plan commun, une partie de l'élément de verrouillage jetable (22) pouvant être rompue par manipulation manuelle afin de permettre son désengagement d'avec l'élément insérable (21).

2. Dispositif de verrouillage selon la revendication 1, dans lequel l'élément de verrouillage jetable est en matière plastique et comprend une pièce formant tête (42) et une pièce formant fiche (43), la pièce formant fiche étant déformable élastiquement afin de permettre son engagement avec le boîtier (20) et/ou l'élément insérable (21) tout en résistant à son désengagement d'avec le boîtier et/ou l'élément insérable, et la pièce formant tête (42) comprenant une ligne de rupture de telle sorte que la manipulation manuelle de la pièce formant tête permette sa séparation de la pièce formant fiche (43) avec le désengagement résultant d'avec le boîtier et/ou l'élément insérable.

3. Dispositif de verrouillage selon la revendication 2, dans lequel la portion d'insertion (44) de l'élément de verrouillage jetable comprend un arbre de verrouillage contigu à la pièce formant tête (42), la pièce formant fiche étant engageable avec le boîtier et l'arbre de verrouillage étant simultanément engageable dans les ouvertures du boîtier et de l'élément insérable, dans lequel la ligne de rupture sépare les parties respectives de la pièce formant tête contiguës à la pièce formant fiche et à l'arbre de verrouillage, de telle sorte que la rupture le long de la ligne de rupture permette à l'arbre de verrouillage d'être désengagé d'avec le boîtier et d'avec l'élément insérable.

4. Dispositif de verrouillage selon l'une quelconque des revendications précédentes, dans lequel l'élément insérable (21) est en forme de J ou en forme de U.

5. Dispositif de verrouillage selon l'une quelconque des revendications précédentes, dans lequel le boîtier (20) comprend un élément de guidage articulé (23), l'élément de guidage (23) comprenant l'ouverture (25) pour recevoir un bras de l'élément insérable (21).
